# EUROPÄISCHE PATENTSCHRIFT

(11) **EP 3 137 333 B1**
(45) Veröffentlichungstag und Bekanntmachung des Hinweises auf die Patenterteilung: **24.01.2018**
(21) Anmeldenummer: 15717095.2
(22) Anmeldetag: 14.04.2015
(51) Int. Cl.: B60K 17/344, B60K 23/08, B60K 23/04, F16H 3/66, F16H 37/08, F16H 48/10

(54) **GETRIEBEEINRICHTUNG FÜR EIN KRAFTFAHRZEUG**
GEARING DEVICE FOR A MOTOR VEHICLE
DISPOSITIF D'ENGRENAGE POUR UN VÉHICULE AUTOMOBILE

(30) Priorität: 30.04.2014 DE 102014006232
(43) Veröffentlichungstag der Anmeldung: 08.03.2017
(73) Patentinhaber: Audi AG, 85045 Ingolstadt (DE)
(72) Erfinder: MEIXNER, Christian, 85049 Ingolstadt (DE)
(74) Vertreter: Lehle, Josef
(86) Internationale Anmeldenummer: PCT/EP2015/000785
(87) Internationale Veröffentlichungsnummer: WO 2015/165570

(56) Entgegenhaltungen:
- EP-A1- 2 402 200
- EP-A2- 1 449 704
- DE-A1-102007 037 676

## Beschreibung

Die Erfindung betrifft eine Getriebeeinrichtung für ein Kraftfahrzeug, wobei das Kraftfahrzeug eine erste Radachse und eine zweite Radachse aufweist, und wobei die zweite Radachse aus zumindest einer ersten Teilachse und einer zweiten Teilachse besteht.

Eine derartige Getriebeeinrichtung dient beispielsweise dem Übertragen eines Drehmoments zwischen einem Antriebsaggregat des Kraftfahrzeugs und den wenigstens zwei Radachsen des Kraftfahrzeugs. Somit sind sowohl die erste Radachse als auch die zweite Radachse über die Getriebeeinrichtung an das Antriebsaggregat angebunden. Sie sind mithin angetriebene Radachsen, sodass das Kraftfahrzeug beispielsweise als allradangetriebenes Kraftfahrzeug vorliegt. Die erste Radachse ist dabei beispielsweise eine Vorderachse des Kraftfahrzeugs, während die zweite Radachse die Hinterachse des Kraftfahrzeugs darstellt. Es kann jedoch auch eine umgekehrte Konfiguration vorliegen.

Bei Getriebeeinrichtungen der genannten Art kann beispielsweise eine Verbindungswelle vorgesehen sein, um das Drehmoment zu der zweiten Radachse zu übertragen, wobei die Verbindungswelle insbesondere als Kardanwelle ausgebildet ist. Um gute Fahreigenschaften zu erzielen, muss der zweiten Radachse üblicherweise ein Differential zugeordnet sein, welches an die Verbindungswelle angeschlossen ist und für eine Aufteilung des über die Getriebeeinrichtung bereitgestellten Drehmoments an die erste Teilachse und die zweite Teilachse Sorge trägt. Das Differential ist mithin in der Wirkverbindung zwischen der Verbindungswelle und der zweiten Radachse vorgesehen. Das Differential ist jedoch platzaufwendig. Eine solche Getriebeanordnung ist z.B. aus der EP 2 402 200 A1 bekannt. Es ist daher Aufgabe der Erfindung, eine Getriebeeinrichtung vorzustellen, welche gegenüber bekannten Getriebeeinrichtungen Vorteile aufweist, insbesondere eine kompakte Ausgestaltung der zweiten Radachse ermöglicht, wobei vorzugsweise kein Differential zwischen der Verbindungswelle und der zweiten Radachse vorliegt.

Dies wird erfindungsgemäß mit der Getriebeeinrichtung mit den Merkmalen des Anspruchs 1 erreicht. Dabei ist eine mit der ersten Teilachse wirkverbindbare erste Verbindungswelle, eine mit der zweiten Teilachse wirkverbindbare zweite Verbindungswelle sowie ein Koppelgetriebe mit einer mit einem Antriebsaggregat des Kraftfahrzeugs wirkverbindbaren Antriebswelle und mit einer mit der ersten Radachse wirkverbindbaren Abtriebswelle vorgesehen, wobei über das Koppelgetriebe die Antriebswelle mit der Abtriebswelle sowie mit der ersten und der zweiten Verbindungswelle drehmomentaufteilend wirkverbunden ist, und wobei die Abtriebswelle über ein Überlagerungsgetriebe schaltbar mit der ersten Verbindungswelle und/oder der zweiten Verbindungswelle wirkverbindbar ist.

Eine Drehmomentübertragung von der Getriebeeinrichtung in Richtung der zweiten Radachse wird also nicht wie üblich mittels lediglich einer Verbindungswelle beziehungsweise Kardanwelle, sondern vielmehr mit wenigstens zwei Verbindungswellen, nämlich der ersten und der zweiten Verbindungswelle, vorgenommen. Die erste Verbindungswelle ist dabei mit der ersten Teilachse der zweiten Radachse koppelbar beziehungsweise gekoppelt. Die zweite Verbindungswelle ist dagegen mit der zweiten Teilachse der zweiten Radachse koppelbar beziehungsweise gekoppelt. Weil die Drehmomentübertragung zu den beiden Teilachsen getrennt voneinander über die beiden Verbindungswellen erfolgt, kann ein ansonsten notwendiges Achsdifferential, welches der zweiten Radachse zugeordnet wäre, in das Koppelgetriebe integriert werden. Das Koppelgetriebe liegt insoweit als Doppeldifferential vor, welches sowohl ein Mittendifferential als auch das Achsdifferential in einer Baueinheit integriert. Entsprechend ist eine platzsparende Anordnung im Bereich der zweiten Radachse möglich.

Die Erfindung betrifft selbstverständlich auch ein Kraftfahrzeug mit einer Getriebeeinrichtung, welche bevorzugt auf die vorstehend genannte Art ausgebildet ist. Das Kraftfahrzeug weist die erste Radachse und die zweite Radachse auf, wobei die zweite Radachse aus zumindest der ersten Teilachse und der zweiten Teilachse besteht. Das Kraftfahrzeug zeichnet sich durch eine mit der ersten Teilachse wirkverbundene erste Verbindungswelle, durch eine mit der zweiten Teilachse wirkverbundene zweite Verbindungswelle sowie durch ein Koppelgetriebe mit einer mit einem Antriebsaggregat des Kraftfahrzeugs wirkverbundenen Antriebswelle und mit einer mit der ersten Radachse wirkverbundenen Abtriebswelle aus, wobei über das Koppelgetriebe die Antriebswelle mit der Abtriebswelle sowie mit der ersten und der zweiten Verbindungswelle drehmomentaufteilend wirkverbunden ist, und wobei die Abtriebswelle über ein Überlagerungsgetriebe schaltbar mit der ersten Verbindungswelle und/oder der zweiten Verbindungswelle wirkverbindbar ist. Das Kraftfahrzeug beziehungsweise die Getriebeeinrichtung des Kraftfahrzeugs kann gemäß der vorliegenden Beschreibung weitergebildet sein.

Die Wirkverbindung über das Koppelgetriebe ist drehmomentaufteilend. Das bedeutet, dass ein Teil des über die Antriebswelle bereitgestellten Drehmoments an der Abtriebswelle und ein weiterer Teil, beispielsweise zu gleichen Teilen, an der ersten und der zweiten Verbindungswelle bereitgestellt wird. Insbesondere kann dabei eine ungleiche Drehmomentverteilung zwischen der ersten Radachse und der zweiten Radachse erzielt werden, beispielsweise im Verhältnis 40:60. Dabei wird, wie bereits erläutert, das der zweiten Teilachse zugeführte Drehmoment, beispielsweise gleichmäßig, auf die erste Teilachse und die zweite Teilachse aufgeteilt. Sowohl die erste als auch die zweite Verbindungswelle ist bevorzugt als Kardanwelle ausgebildet.

Die Getriebeeinrichtung verfügt vorzugsweise weiterhin über das Überlagerungsgetriebe, welches jedoch nicht obligatorisch ist. Die Getriebeeinrichtung kann insoweit auch ohne das Überlagerungsgetriebe realisiert sein. Das Überlagerungsgetriebe dient dem Herstellen einer Wirkverbindung mit der ersten Verbindungswelle, der zweiten Verbindungswelle oder beiden Verbindungswellen. Die Wirkverbindung ist dabei vorzugsweise schaltbar. Insbesondere kann es vorgesehen sein, dass sowohl die erste Verbindungswelle als auch die zweite Verbindungswelle über das Überlagerungsgetriebe mit der Abtriebswelle wirkverbindbar sind, wobei jedoch unterschiedliche Schaltzustände vorliegen können. In einem ersten Schaltzustand ist beispielsweise keine der Verbindungswellen mit der Abtriebswelle wirkverbunden, in einem zweiten Schaltzustand lediglich die erste Verbindungswelle und in einem dritten Schaltzustand lediglich die zweite Verbindungswelle. Das Überlagerungsgetriebe weist dabei eine bestimmte Übersetzung auf, welche beispielsweise fest ist. Selbstverständlich kann das Überlagerungsgetriebe jedoch alternativ auch als Schaltgetriebe ausgeführt sein und insoweit eine einstellbare Übersetzung aufweisen.

Es soll darauf hingewiesen werden, dass das Überlagerungsgetriebe von dem Koppelgetriebe verschieden ist. Die über das Überlagerungsgetriebe zwischen der Abtriebswelle und der ersten Verbindungswelle beziehungsweise der zweiten Verbindungswelle hergestellte Wirkverbindung liegt insoweit nicht oder zumindest nicht vollständig über das Koppelgetriebe vor. Besonders bevorzugt ermöglicht das Übertragungsgetriebe ein vollständiges Umgehen des Koppelgetriebes, sodass bei hergestellter Wirkverbindung zwischen der Abtriebswelle und der ersten Verbindungswelle beziehungsweise der zweiten Verbindungswelle über das Überlagerungsgetriebe zwei Wirkverbindungen zwischen der Abtriebswelle und der ersten Verbindungswelle beziehungsweise der zweiten Verbindungswelle vorliegen können, nämlich eine über das Koppelgetriebe und eine andere über das Überlagerungsgetriebe.

Mithilfe des Überlagerungsgetriebes ist es insbesondere bei einer Kurvenfahrt des Kraftfahrzeugs möglich, ein Drehmoment von der ersten Radachse, beispielsweise der Vorderachse, zu derjenigen Teilachse der zweiten Radachse zu übertragen, welche einem kurvenäußeren Rad zugeordnet ist. Das bedeutet, dass mithilfe des Überlagerungsgetriebes in zahlreichen Fahrzuständen des Kraftfahrzeugs, vorzugsweise in jedem Fahrzustand des Kraftfahrzeugs, ein "torque vectoring" möglich ist, also dass gezielte Übertragen von Drehmoment auf eine bestimmte Radachse, insbesondere auf eine bestimmte Teilachse der zweiten Radachse. Das Übertragungsgetriebe kann beispielsweise als Minusplanetengetriebe oder als Plusplanetengetriebe realisiert sein.

In einer bevorzugten Ausgestaltung der Erfindung ist vorgesehen, dass das Koppelgetriebe ein erstes Planetengetriebe und ein mit dem ersten Planetengetriebe unmittelbar wirkverbundenes zweites Planetengetriebe aufweist, wobei die Antriebswelle und die Abtriebswelle unmittelbar mit dem ersten Planetengetriebe und die erste sowie die zweite Verbindungswelle unmittelbar mit dem zweiten Planetengetriebe wirkverbunden sind. Das Koppelgetriebe integriert mithin zwei Planetengetriebe, nämlich das erste Planetengetriebe und das zweite Planetengetriebe. Das erste Planetengetriebe stellt dabei beispielsweise das Mittendifferential dar, während das zweite Planetengetriebe als Achsdifferential für die zweite Radachse arbeitet. Die beiden Planetengetriebe sind miteinander wirkverbunden. Die Antriebswelle und die Abtriebswelle sind unmittelbar an das erste Planetengetriebe angeschlossen, während die beiden Verbindungswellen unmittelbar an das zweite Planetengetriebe angeschlossen sind. Unter der unmittelbaren Wirkverbindung beziehungsweise dem unmittelbaren Anschluss ist zu verstehen, dass die genannten Wellen jeweils mit einem Element des entsprechenden Planetengetriebes gekoppelt sind, sodass die Wirkverbindung nicht über das jeweils andere Planetengetriebe verläuft. Die Wirkverbindung zwischen dem ersten Planetengetriebe und dem zweiten Planetengetriebe ist beispielsweise derart vorgesehen, dass die Hohlräder der Planetengetriebe unmittelbar miteinander wirkverbunden oder als gemeinsames Hohlrad ausgeführt sind.

Eine bevorzugte Ausführungsform der Erfindung sieht vor, dass das erste Planetengetriebe ein erstes Sonnenrad, ein erstes Hohlrad und einen ersten Planetenträger mit wenigstens einem mit dem ersten Sonnenrad und dem ersten Hohlrad kämmenden Planetenrad aufweist, wobei der erste Planetenträger mit der Antriebswelle und das erste Sonnenrad mit der Abtriebswelle wirkverbunden ist. Das erste Planetengetriebe weist also den bekannten Aufbau mit Sonnenrad, Hohlrad und auf dem Planetenträger angeordneten Planetenrad auf. Das Planetenrad ist drehbar an dem Planetenträger angeordnet und kämmt sowohl mit dem ersten Sonnenrad als auch mit dem ersten Hohlrad, stellt also insoweit eine Wirkverbindung zwischen diesen her. An den ersten Planetenträger ist nun die Antriebswelle und an das erste Sonnenrad die Abtriebswelle angeschlossen.

In einer bevorzugten Ausgestaltung der Erfindung ist vorgesehen, dass das zweite Planetengetriebe ein zweites Sonnenrad, ein zweites Hohlrad und einen zweiten Planetenträger aufweist, wobei der zweite Planetenträger mit der ersten oder der zweiten Verbindungswelle und das zweite Sonnenrad mit der jeweils anderen Verbindungswelle wirkverbunden ist. Auch das zweite Planetengetriebe weist also das Sonnenrad, das Hohlrad und den Planetenträger auf. Grundsätzlich bestehen nun zwei verschiedene Ausgestaltungsmöglichkeiten für die Getriebeeinrichtung. So kann beispielsweise die erste Verbindungswelle an den zweiten Planetenträger angeschlossen sein, während das zweite Sonnenrad an die zweite Verbindungswelle angebunden ist. Umgekehrt kann selbstverständlich auch die zweite Verbindungswelle mit dem zweiten Planetenträger und die erste Verbindungswelle mit dem zweiten Sonnenrad wirkverbunden beziehungsweise an diese angeschlossen sein.

Eine Weiterbildung der Erfindung sieht vor, dass der zweite Planetenträger zumindest ein Außenplanetenrad und zumindest ein Innenplanetenrad aufweist, die miteinander kämmen, wobei das Außenplanetenrad mit dem zweiten Hohlrad und das Innenplanetenrad mit dem zweiten Sonnenrad kämmt. Das zweite Planetengetriebe unterscheidet sich also insoweit von dem ersten Planetengetriebe, als das es als Doppelplanetengetriebe ausgebildet ist. Entsprechend ist sowohl das Außenplanetenrad als auch das Innenplanetenrad vorgesehen, über welche das zweite Hohlrad und das zweite Sonnenrad in Wirkverbindung stehen. Sowohl das Außenplanetenrad als auch das Innenplanetenrad sind an dem zweiten Planetenträger drehbar angeordnet. Sie kämmen miteinander, während gleichzeitig das Außenplanetenrad in das zweite Hohlrad und das Innenplanetenrad in das zweite Sonnenrad eingreift. Das Außenplanetenrad und das Innenplanetenrad können an bezüglich einer Drehachse des zweiten Planetenträgers unterschiedlichen Radialpositionen angeordnet sein.

Eine vorteilhafte Ausgestaltung der Erfindung sieht vor, dass die Wirkverbindung zwischen der zweiten Verbindungswelle und dem zweiten Planetenträger über eine Zahnradstufe oder die Wirkverbindung zwischen der zweiten Verbindungswelle und dem zweiten Sonnenrad über eine weitere Zahnradstufe oder über eine drehrichtungserhaltende Kopplung, insbesondere über ein Umschlingungsgetriebe oder über ein drehrichtungserhaltendes Zahnradgetriebe, vorliegt. Auch hier bestehen wiederum zwei Ausgestaltungsmöglichkeiten für die Getriebeeinrichtung. So kann die zweite Verbindungswelle insbesondere entweder an den zweiten Planetenträger oder alternativ an das zweite Sonnenrad angeschlossen sein. In ersterem Fall liegt beispielsweise eine Zahnradstufe vor, wobei beispielsweise ein erstes Zahnrad an dem zweiten Planetenträger vorgesehen beziehungsweise mit diesem wirkverbunden ist, während ein mit diesem Zahnrad kämmendes weiteres Zahnrad an der zweiten Verbindungswelle vorliegt.

Soll dagegen die zweite Verbindungswelle mit dem zweiten Sonnenrad wirkverbunden sein, so liegt diese über die weitere Zahnradstufe oder über die drehrichtungserhaltende Kopplung vor. Für die weitere Zahnradstufe gilt das vorstehend für die erste Zahnradstufe Gesagte. Die drehrichtungserhaltende Kopplung ist eine Getriebeeinrichtung, welche an ihrem Eingang dieselbe Drehrichtung aufweist wie an ihrem Ausgang. Beispielsweise ist die Kopplung als Umschlingungsgetriebe oder als Zahnradgetriebe mit einer Zwischenstufe, mithin also als drehrichtungserhaltendes Zahnradgetriebe, ausgebildet.

In einer weiteren, besonders bevorzugten Ausgestaltung der Erfindung, ist vorgesehen, dass das Überlagerungsgetriebe als Planetengetriebe ausgebildet ist, über das die Abtriebswelle mit dem ersten Hohlrad und/oder dem zweiten Hohlrad wirkverbunden ist. Das Überlagerungsgetriebe ist dabei insbesondere unmittelbar und/oder starr mit der Abtriebswelle einerseits und mit dem ersten Hohlrad und/oder dem zweiten Hohlrad andererseits wirkverbunden. Die Wirkverbindung liegt insoweit nicht lediglich mittelbar, beispielsweise über das Koppelgetriebe vor. Wie bereits vorstehend erläutert, kann das Überlagerungsgetriebe entweder als Minusplanetengetriebe oder als Plusplanetengetriebe ausgebildet sein, welche sich in der Drehrichtung zumindest einer ihrer Komponenten unterscheiden.

Dabei kann es in einer weiteren Ausgestaltung der Erfindung beispielsweise vorgesehen sein, dass das Überlagerungsgetriebe ein Überlagerungsgetriebesonnenrad und einen Überlagerungsgetriebeplanetenträger aufweist, wobei ein an dem Überlagerungsgetriebeplanetenträger gelagertes erstes Überlagerungsgetriebeplanetenrad mit dem mit der Abtriebswelle gekoppelten Überlagerungsgetriebesonnenrad und ein ebenfalls an dem Überlagerungsgetriebeplanetenträger gelagertes zweites Überlagerungsgetriebeplanetenrad mit einem mit dem ersten Hohlrad und/oder dem zweiten Hohlrad gekoppelten Überlagerungsgetrieberad kämmt. Das Überlagerungsgetriebesonnenrad ist vorzugsweise starr und/oder permanent mit der Abtriebswelle wirkverbunden, insbesondere an dieser befestigt. Das Überlagerungsgetriebesonnenrad kann insoweit auch als Abtriebswellenrad bezeichnet werden. Entsprechend kann das Überlagerungsgetrieberad starr und/oder permanent mit dem ersten Hohlrad und/oder dem zweiten Hohlrad wirkverbunden sein, insbesondere an diesem befestigt sein.

Beispielsweise liegt dabei zwischen dem Überlagerungsgetriebeplanetentrad und dem Überlagerungsgetriebesonnenrad einerseits und dem Überlagerungsgetriebeplanetenrad und dem Überlagerungsgetrieberad andererseits unterschiedliche Übersetzungsverhältnisse vor. Selbstverständlich können auch identische Übersetzungsverhältnisse realisiert sein. Beispielsweise ist zumindest eines der Übersetzungsverhältnisse gleich Eins, während das andere davon verschieden ist. Selbstverständlich können auch beide Übersetzungsverhältnisse von Eins verschieden sein, insbesondere größer als Eins oder kleiner als Eins sein. Auch eine Ausführungsform, in welcher beide Übersetzungsverhältnisse gleich Eins sind, kann realisiert werden.

Alternativ kann es selbstverständlich vorgesehen sein, dass das Überlagerungsgetriebe den Überlagerungsgetriebeplanetenträger und ein Überlagerungsgetriebehohlrad aufweist, wobei ersterer starr und/oder permanent mit dem ersten Hohlrad und/oder dem zweiten Hohlrad wirkverbunden ist. Das Überlagerungsgetriebehohlrad dagegen kann bei einer derartigen Ausgestaltung starr und/oder permanent mit der Abtriebswelle wirkverbunden sein, insbesondere unmittelbar an dieser befestigt sein.

In einer weiteren Ausgestaltung der Erfindung ist vorgesehen, dass das Koppelgetriebe wenigstens eine Kupplung aufweist, mittels welcher der zweite Planetenträger oder das zweite Sonnenrad bezüglich des ersten Planetenträgers oder bezüglich des Überlagerungsgetriebeplanetenträgers zumindest teilweise, insbesondere vollständig, festsetzbar ist. Bevorzugt sind selbstverständlich zwei Kupplungen vorgesehen, wobei mittels einer ersten Kupplung der zweite Planetenträger und mittels einer zweiten Kupplung das zweite Sonnenrad bezüglich des ersten Planetenträgers oder bezüglich des Überlagerungsgetriebeplanetenträgers zumindest teilweise, insbesondere vollständig, festsetzbar ist. Mit einer derartigen Ausgestaltung des Koppelgetriebes kann eine Drehmomentverteilung zwischen der ersten und der zweiten Radachse vorgenommen werden. Insbesondere kann das Drehmoment beziehungsweise ein Teil des Drehmoments gezielt von der ersten Radachse auf entweder die erste Teilachse oder die zweite Teilachse der zweiten Radachse verlagert werden.

Entsprechend ist ein Torque Vectoring mittels einer einzigen Getriebeeinrichtung realisierbar. Sind wie vorstehend beschrieben zwei Kupplungen vorgesehen, so kann durch Betätigen der jeweiligen Kupplung gezielt Drehmoment von der ersten Radachse auf die erste Teilachse, die zweite Teilachse oder beide verlagert werden. Wird die Kupplung derart angesteuert, dass das Festsetzen lediglich teilweise vorliegt, so liegt zwischen dem zweiten Planetenträger beziehungsweise dem zweiten Sonnenrad und dem ersten Planetenträger Schlupf vor. Ist dagegen ein vollständiges Festsetzen vorgesehen, so ist eine schlupffreie Verbindung hergestellt.

In einer bevorzugten Ausführungsform der Erfindung sind das erste Hohlrad und das zweite Hohlrad als gemeinsames Hohlrad des ersten und des zweiten Planetengetriebes ausgeführt. Auf diese Art und Weise ist die Wirkverbindung zwischen dem ersten Planetengetriebe und dem zweiten Planetengetriebe auf einfache Art und Weise über die Hohlräder hergestellt.

Eine Weiterbildung der Erfindung sieht vor, dass die erste Verbindungswelle über eine erste Getriebeeinheit mit der ersten Teilachse und die zweite Verbindungswelle über eine, insbesondere identisch mit der ersten Getriebeeinheit ausgebildete zweite Getriebeeinheit mit der zweiten Teilachse verbindbar ist. Zwischen den Verbindungswellen und der jeweiligen Teilachse sind also die Getriebeeinheiten vorgesehen. Diese Getriebeeinheiten können beispielsweise eine Zahnradstufe, insbesondere eine Kegelradstufe, aufweisen. Dabei können für die erste Teilachse und die zweite Teilachse unterschiedliche Getriebeeinheiten vorgesehen sein. Besonders vorteilhaft ist es jedoch, wenn die zweite Getriebeeinheit der zweiten Teilachse identisch mit der ersten Getriebeeinheit der ersten Teilachse ausgestaltet ist, um insoweit eine geringere Anzahl unterschiedlicher Teile vorhalten zu müssen.

Schließlich kann vorgesehen sein, dass die erste und die zweite Verbindungswelle koaxial oder parallel versetzt zueinander angeordnet sind. Ersteres ist insbesondere dann der Fall, wenn die erste Verbindungswelle mit dem zweiten Planetenträger und die zweite Verbindungswelle mit dem zweiten Sonnenrad jeweils unmittelbar wirkverbunden ist, also beispielsweise ohne die vorstehend angesprochene Zahnradstufe. Die koaxiale Anordnung der beiden Verbindungswellen ermöglicht eine äußerst platzsparende Ausgestaltung der Getriebeeinrichtung. Die parallel zueinander versetzte Anordnung ist insbesondere vorgesehen, wenn zum Beispiel die Wirkverbindung der ersten Verbindungswelle über die Zahnradstufe oder die drehrichtungserhaltende Kopplung verläuft.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine erste Ausführungsform der Getriebeeinrichtung,
- Figur 2: eine erste Variante einer zweiten Ausführungsform der Getriebeeinrichtung,
- Figur 3: eine zweite Variante der zweiten Ausführungsform,
- Figur 4: eine dritte Variante der zweiten Ausführungsform,
- Figur 5: eine vierte Variante der zweiten Ausführungsform,
- Figur 6: eine schematische Darstellung eines Antriebsstrangs mit der Getriebeeinrichtung in einer ersten Variante einer dritten Ausführungsform,
- Figur 7: eine Detaildarstellung der Getriebeeinrichtung in der ersten Variante der dritten Ausführungsform,
- Figur 8: die Getriebeeinrichtung in einer zweiten Variante der dritten Ausführungsform, und
- Figur 9: die Getriebeeinrichtung in einer dritten Variante der dritten Ausführungsform.

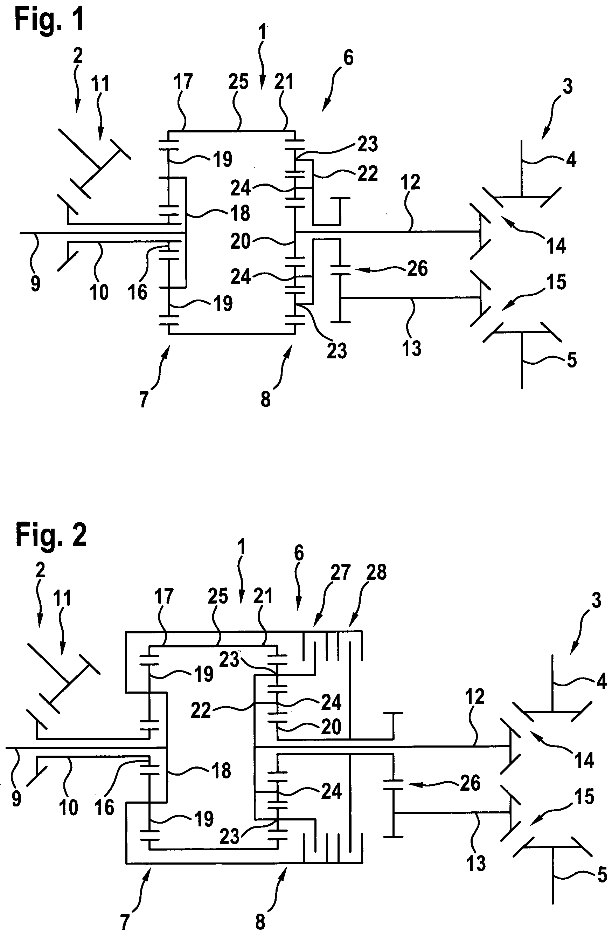

Die Figur 1 zeigt eine erste Ausführungsform einer Getriebeeinrichtung 1 für ein Kraftfahrzeug, welches hier nicht näher dargestellt ist. Das Kraftfahrzeug weist eine erste Radachse 2 und eine zweite Radachse 3 auf, die hier lediglich schematisch angedeutet sind, wobei die zweite Radachse 3 aus zumindest einer ersten Teilachse 4 und einer zweiten Teilachse 5 besteht. Die Getriebeeinrichtung 1, die erste Radachse 2 und die zweite Radachse 3 bilden insoweit zumindest einen Teil eines Antriebsstrangs des Kraftfahrzeugs. Die Getriebeeinrichtung 1 verfügt über ein Koppelgetriebe 6, welches sich im Wesentlichen aus einem ersten Planetengetriebe 7 und einem zweiten Planetengetriebe 8 zusammensetzt. Das Koppelgetriebe 1 weist eine Antriebswelle 9 auf, die mit einem Antriebsaggregat des Kraftfahrzeugs wirkverbindbar ist. Weiterhin verfügt das Koppelgetriebe 6 über eine Abtriebswelle 10, an welche über eine Zahnradstufe 11 die erste Radachse 2 angeschlossen ist. Eine Wirkverbindung von dem Koppelgetriebe 6 zu der zweiten Radachse 3 beziehungsweise der dieser zugeordneten ersten Teilachse 4 und der zweiten Teilachse 5 liegt über eine erste Verbindungswelle 12 und eine zweite Verbindungswelle 13 vor. Die erste Verbindungswelle 12 ist über eine erste Getriebeeinheit 14, die beispielsweise als Zahnradstufe vorliegt, mit der ersten Teilachse 4 und die zweite Verbindungswelle 13 über eine zweite Getriebeeinheit 15, die beispielsweise ebenfalls als Zahnradstufe vorliegt, mit der zweiten Teilachse 5 wirkverbunden.

Das erste Planetengetriebe 7 besteht aus einem ersten Sonnenrad 16, einem ersten Hohlrad 17 und einem ersten Planetenträger 18 mit wenigstens einem Planetenrad 19. Das zweite Planetengetriebe 8 besteht dagegen aus einem zweiten Sonnenrad 20, einem zweiten Hohlrad 21 und einem zweiten Planetenträger 22. An dem zweiten Planetenträger 22 sind wenigstens ein Außenplanetenrad 23 sowie mindestens ein Innenplanetenrad 24 drehbar angeordnet. Das Planetenrad 19, welches drehbar an dem ersten Planetenträger 18 befestigt ist, kämmt nun sowohl mit dem ersten Sonnenrad 16 als auch mit dem ersten Hohlrad 17. Im Falle des zweiten Planetengetriebes 8 ist es dagegen vorgesehen, dass das Außenplanetenrad 23 mit dem Innenplanetenrad 24 und zudem mit dem zweiten Hohlrad 21 kämmt. Das Innenplanetenrad 24 kämmt dagegen mit dem Außenplanetenrad 23 und mit dem zweiten Sonnenrad 20. Eine Wirkverbindung zwischen dem zweiten Sonnenrad 20 und dem zweiten Hohlrad 21 liegt mithin über das Außenplanetenrad 23 und das Innenplanetenrad 24 vor.

Die Planetengetriebe 7 und 8 sind miteinander wirkverbunden. In dem hier vorliegenden Ausführungsbeispiel ist dies durch die Ausbildung der Hohlräder 17 und 21 als gemeinsames Hohlrad 25 vorgesehen. Es kann jedoch auch auf andere Art und Weise eine Wirkverbindung zwischen den Hohlrädern 17 und 21 hergestellt sein. Die Antriebswelle 9 und die Abtriebswelle 10 sind nun unmittelbar mit dem ersten Planetengetriebe 7 und die beiden Verbindungswellen 12 und 13 unmittelbar mit dem zweiten Planetengetriebe 8 wirkverbunden. Dabei ist in dem hier vorliegenden Ausführungsbeispiel die Antriebswelle 9 mit dem ersten Planetenträger 18 und die Abtriebswelle 10 mit dem ersten Sonnenrad 16 unmittelbar wirkverbunden. Dagegen ist die erste Verbindungswelle 12 mit dem zweiten Sonnenrad 20 und die zweite Verbindungswelle 13 über eine Zahnradstufe 26 mit dem zweiten Planetenträger 22 unmittelbar wirkverbunden.

Die Figur 2 zeigt eine erste Variante einer zweiten Ausführungsform der Getriebeeinrichtung 1. Diese ist grundsätzlich ähnlich der ersten Ausführungsform aufgebaut, sodass insoweit auf die vorstehenden Ausführungen verwiesen wird. Nachfolgend wird lediglich auf die Unterschiede eingegangen. Diese liegen hauptsächlich auf Seiten des zweiten Planetengetriebes 8. Es ist nun vorgesehen, dass die erste Verbindungswelle 12 unmittelbar an den zweiten Planetenträger 22 angeschlossen ist, während die zweite Verbindungswelle 13 über die Zahnradstufe 26 an das zweite Sonnenrad 20 angebunden ist.

Aus dieser Anordnung ergibt sich die Möglichkeit, zwei Kupplungen 27 und 28 vorzusehen. Mithilfe der Kupplung 27 kann der zweite Planetenträger 22 bezüglich des ersten Planetenträgers 19 zumindest teilweise, insbesondere vollständig, festgesetzt werden. Mithilfe der Kupplung 28 kann dagegen das zweite Sonnenrad 20 bezüglich des ersten Planetenträgers 18 zumindest teilweise, insbesondere vollständig, festgesetzt werden. Mithilfe der Kupplungen 27 und 28 kann gezielt Drehmoment von der ersten Radachse 2 auf entweder die erste Teilachse 4 (mithilfe der Kupplung 27) oder auf die zweite Teilachse 5 (mithilfe der Kupplung 28) umgeleitet werden. Entsprechend ist mit der Getriebeeinrichtung 1 ein Torque Vectoring zwischen der ersten Radachse 2 und der zweiten Radachse 3 beziehungsweise den Teilachsen 4 und 5 realisiert. Über die Kupplungen 27 und 28 kann anstelle der Wirkverbindung zu dem ersten Planetenträger 18 auch eine Wirkverbindung zu dem ersten Sonnenrad 16 herstellbar sein.

In der hier dargestellten ersten Variante der ersten Ausführungsform der Getriebeeinrichtung 1 sind die Getriebeeinheiten 14 und 15 spiegelbildlich ausgestaltet. Dies ist auch für die erste Ausführungsform, die in der Figur 1 gezeigt ist, der Fall.

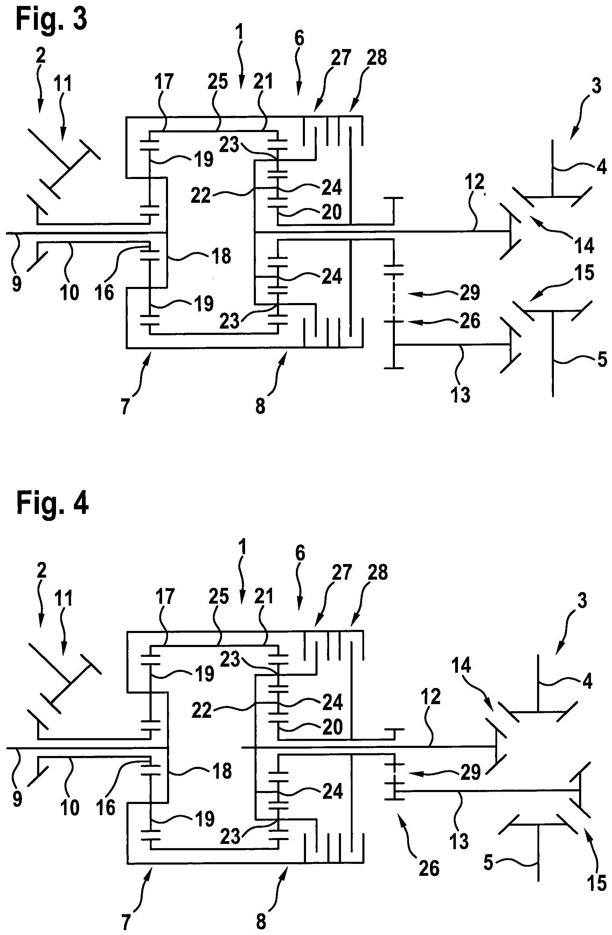

Die Figur 3 zeigt eine zweite Variante der zweiten Ausführungsform. Nachfolgend wird lediglich auf die Unterschiede eingegangen. Insoweit wird auf die vorstehenden Ausführungen verwiesen. Hier ist es nun vorgesehen, dass die Getriebeeinheiten 14 und 15 identisch ausgebildet sind. Dies hat den Vorteil, dass die Anzahl der bereitzustellenden unterschiedlichen Teile verringert werden kann. Bei einer derartigen Ausgestaltung der Getriebeeinheiten 14 und 15 muss die Anbindung beispielsweise der zweiten Verbindungswelle 13 an das zweite Planetengetriebe 8 beziehungsweise das Koppelgetriebe 6 geändert werden. Beispielsweise ist hier nun eine drehrichtungserhaltende Kopplung 29 vorgesehen, die in dem vorliegenden Fall als Umschlingungsgetriebe ausgestaltet ist.

Die Figur 4 zeigt eine dritte Variante der zweiten Ausführungsform der Getriebeeinrichtung 1. Auch hier wird auf die vorstehenden Ausführungen verwiesen. Der Unterschied zu den vorstehenden Varianten liegt in der Anordnung der Getriebeeinheiten 14 und 15 zueinander. Aufgrund der hier gewählten Bauform können diese sehr platzsparend zueinander angeordnet sein beziehungsweise sogar in einem Getriebemodul integriert vorliegen.

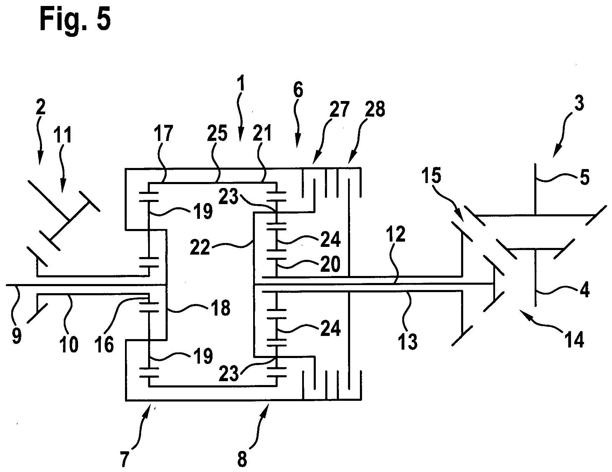

Die Figur 5 zeigt eine vierte Variante der zweiten Ausführungsform der Getriebeeinrichtung 1. Es wird wiederum auf die vorstehenden Ausführungen verwiesen. Während die Verbindungswellen 12 und 13 für die bislang vorgestellten Ausführungsformen parallel versetzt zueinander angeordnet waren, liegen sie nun koaxial zueinander vor. Auch auf diese Art und Weise ist eine äußerst platzsparende Anordnung der Getriebeeinheiten 14 und 15 beziehungsweise eine Integration in einem Getriebemodul möglich.

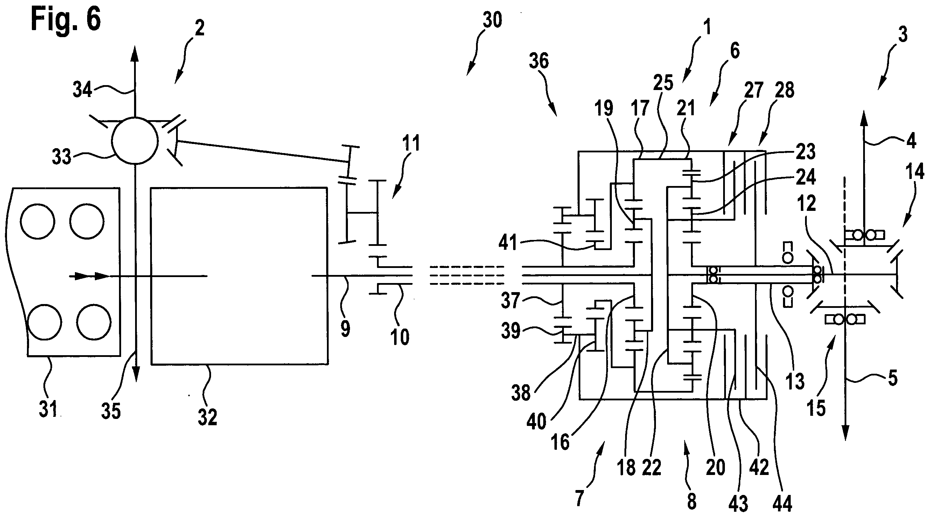

Die Figur 6 zeigt eine schematische Darstellung eines Antriebsstrangs 30 des Kraftfahrzeugs. Dieser weist ein Antriebsaggregat 31, beispielsweise eine Brennkraftmaschine, und ein Getriebe 32, insbesondere ein Schaltgetriebe, auf. Das Antriebsaggregat 31 ist mit der Getriebeeinrichtung 1 wirkverbunden, insbesondere über das Getriebe 32. Die Wirkverbindung des Antriebsaggregats 31 liegt dabei zu der Antriebswelle 9 der Getriebeeinrichtung 1 vor. Auch in der hier dargestellten ersten Variante einer dritten Ausführungsform weist die Getriebeeinrichtung 1 das Koppelgetriebe 6 auf, welches sich im Wesentlichen aus dem ersten Planetengetriebe 7 und dem zweiten Planetengetriebe 8 zusammensetzt. Die Abtriebswelle 10 des Koppelgetriebes 6 ist an die erste Radachse 2 angeschlossen, beispielsweise über die Zahnradstufe 11. Die erste Radachse 2 kann ein Achsdifferentialgetriebe 33 aufweisen, über welches Teilachsen 34 und 35 der ersten Radachse 2 mit der Zahnradstufe 11 beziehungsweise der Abtriebswelle 10 wirkverbunden sind. Die Radachse 3 beziehungsweise die dieser zugeordneten Teilachsen 4 und 5 sind über die erste Verbindungswelle 12 und die zweite Verbindungswelle 13 mit dem Koppelgetriebe 6 wirkverbunden. Die erste Verbindungswelle 12 ist über die erste Getriebeeinheit 14, die beispielsweise als Zahnradstufe vorliegt, mit der ersten Teilachse 4 und die zweite Verbindungswelle 13 über eine zweite Getriebeeinheit 15, die beispielsweise ebenfalls als Zahnradstufe vorliegt, mit der zweiten Teilachse 5 wirkverbunden.

Das erste Planetengetriebe 7 besteht aus dem ersten Sonnenrad 16, dem ersten Hohlrad 17 und dem ersten Planetenträger 18 mit wenigstens einem Planetenrad 19. Das zweite Planetengetriebe 8 besteht aus dem zweiten Sonnenrad 20, dem zweiten Hohlrad 21 und dem zweiten Planetenträger 22. An dem zweiten Planetenträger 22 sind das wenigstens eine Außenplanetenrad 23 sowie das mindestens eine Innenplanetenrad 24 drehbar angeordnet. Das Planetenrad 19, welches drehbar an dem ersten Planetenträger 18 befestigt ist, kämmt sowohl mit dem ersten Sonnenrad 16 als auch mit dem ersten Hohlrad 17. Im Falle des zweiten Planetengetriebes 8 kämmt das Außenplanetenrad 23 mit dem Innenplanetenrad 24 und zudem mit dem zweiten Hohlrad 21. Das Innenplanetenrad 24 kämmt mit dem Außenplanetenrad 23 und dem zweiten Sonnenrad 20. Die Wirkverbindung zwischen dem zweiten Sonnenrad 20 und dem zweiten Hohlrad 21 liegt mithin über das Außenplanetenrad 23 und das Innenplanetenrad 24 vor. Die vorstehenden Ausführungen sind zum Verständnis der Getriebeeinrichtung 1 grundsätzlich heranziehbar.

Die Planetengetriebe 7 und 8 sind miteinander wirkverbunden, beispielsweise durch die Ausbildung der Hohlglieder 17 und 21 als gemeinsames Hohlrad 25. Selbstverständlich kann die Wirkverbindung zwischen den Hohlrädern 17 und 21 jedoch auch auf andere Art und Weise hergestellt sein. Die Antriebswelle 9 und die Abtriebswelle 10 sind unmittelbar mit dem ersten Planetengetriebe 7 und die beiden Verbindungswellen 12 und 13 unmittelbar mit dem zweiten Planetengetriebe 8 wirkverbunden. Die Wirkverbindungen liegen dabei vorzugsweise starr und/oder permanent vor. Die Antriebswelle 9 ist dabei in dem hier dargestellten Ausführungsbeispiel mit dem Planetenträger 18 und die Abtriebswelle 10 mit dem ersten Sonnenrad 16 unmittelbar wirkverbunden. Die erste Verbindungswelle 12 ist mit dem zweiten Planetenträger 22 und die zweite Verbindungswelle 13 mit dem zweiten Sonnenrad 20 unmittelbar wirkverbunden.

Die Getriebeeinrichtung 1 weist nun neben dem Koppelgetriebe 6 ein Überlagerungsgetriebe 36 auf. Dieses dient dem schaltbaren Wirkverbinden der Abtriebswelle 10 mit der ersten Verbindungswelle 12 und/oder der zweiten Verbindungswelle 13. Das Überlagerungsgetriebe 36 ist als Planetengetriebe ausgebildet, welches ein Überlagerungsgetriebesonnenrad 37 und einen Überlagerungsgetriebeplanetenträger 38 aufweist. An dem Überlagerungsgetriebeplanetenträger 38 sind wenigstens ein erstes Überlagerungsgetriebeplanetenrad 39 sowie ein zweites Überlagerungsgetriebeplanetenrad 40 drehbar gelagert. Das erste Überlagerungsgetriebeplanetenrad 39 kämmt mit dem Überlagerungsgetriebesonnenrad 37, welches mit der Abtriebswelle 10 gekoppelt ist beziehungsweise starr an dieser befestigt ist.

Das zweite Überlagerungsgetriebeplanetenrad 40 kämmt dagegen mit einem Überlagerungsgetrieberad 41, welches hier als Überlagerungsgetriebesonnenrad 41 ausgebildet ist. Das Überlagerungsgetrieberad 41 ist mit dem ersten Hohlrad 17 und/oder dem zweiten Hohlrad 21, insbesondere dem gemeinsamen Hohlrad 25, wirkverbunden, insbesondere starr und/oder permanent. Bevorzugt ist das Überlagerungsgetrieberad 41 an dem gemeinsamen Hohlrad 25 befestigt. Zwischen dem Überlagerungsgetriebesonnenrad 37 und dem ersten Überlagerungsgetriebeplanetenrad 39 liegt ein erstes Überlagerungsgetriebeübersetzungsverhältnis und zwischen dem Überlagerungsgetrieberad 41 und dem zweiten Überlagerungsgetriebeplanetenrad 40 ein zweites Überlagerungsgetriebeübersetzungsverhältnis vor. Diese Übersetzungsverhältnisse sind vorzugsweise voneinander verschieden, sodass insbesondere die Überlagerungsplanetenräder 39 und 40 unterschiedliche Durchmesser aufweisen. Das erste Überlagerungsgetriebeübersetzungsverhältnis ist in dem hier dargestellten Ausführungsbeispiel größer als das zweite Überlagerungsgetriebeübersetzungsverhältnis.

Der Überlagerungsgetriebeplanetenträger 38 ist mit einem ersten Kupplungselement 42 starr und/oder permanent wirkverbunden, welches den Kupplungen 27 und 28 gemeinsam zugeordnet ist. Die Kupplung 27 verfügt über ein zweites Kupplungselement 43 und die Kupplung 28 über ein zweites Kupplungselement 44. Sowohl das zweite Kupplungselement 43 als auch das zweite Kupplungselement 44 sind wahlweise mit dem ersten Kupplungselement 42 drehmomentübertragend kuppelbar. In einem ersten Schaltzustand der Kupplungen 27 und 28 sind folglich die zweiten Kupplungselemente 43 und 44 vollständig von dem ersten Kupplungselement 42 getrennt, sodass kein Drehmoment übertragen wird. In einer zweiten Betriebsart der Kupplung 27 ist dagegen das zweite Kupplungselement 43 mit dem ersten Kupplungselement 42 sowie in einer zweiten Betriebsart der Kupplung 28 das zweite Kupplungselement 44 mit dem ersten Kupplungselement 42 drehmomentübertragend verbunden. Entsprechend kann über die Kupplungen 27 und 28 eine Wirkverbindung zwischen dem Überlagerungsgetriebeplanetenträger 38 und der ersten Verbindungswelle 12, der zweiten Verbindungswelle 13 oder beiden wahlweise hergestellt werden.

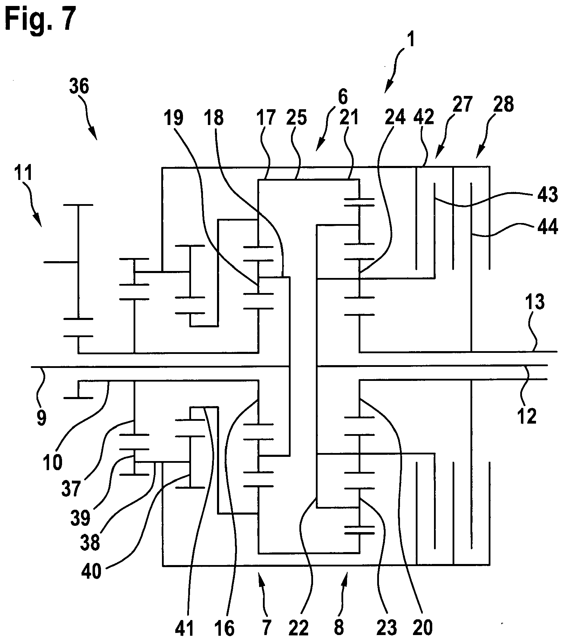

Die Figur 7 zeigt eine Detailansicht der in der Figur 6 gezeigten ersten Variante der dritten Ausführungsform der Getriebeeinrichtung 1. Insoweit wird auf die vorstehenden Ausführungen verwiesen.

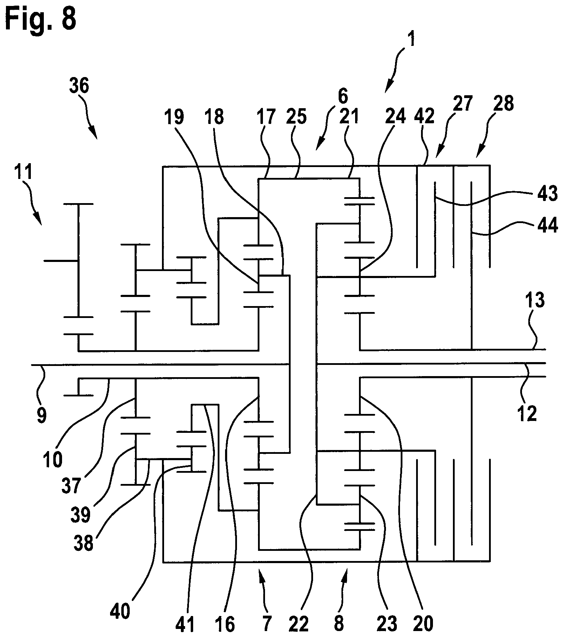

Die Figur 8 zeigt eine zweite Variante der dritten Ausführungsform der Getriebeeinrichtung 1. Der Unterschied zu der ersten Variante liegt lediglich darin, dass die Überlagerungsgetriebeübersetzungsverhältnisse verschieden sind. Bei der gezeigten Variante ist das erste Überlagerungsgetriebeübersetzungsverhältnis kleiner als das zweite Überlagerungsgetriebeübersetzungsverhältnis. Zu der weiteren Ausgestaltung der Getriebeeinrichtung 1 wird auf die vorstehenden Ausführungen verwiesen.

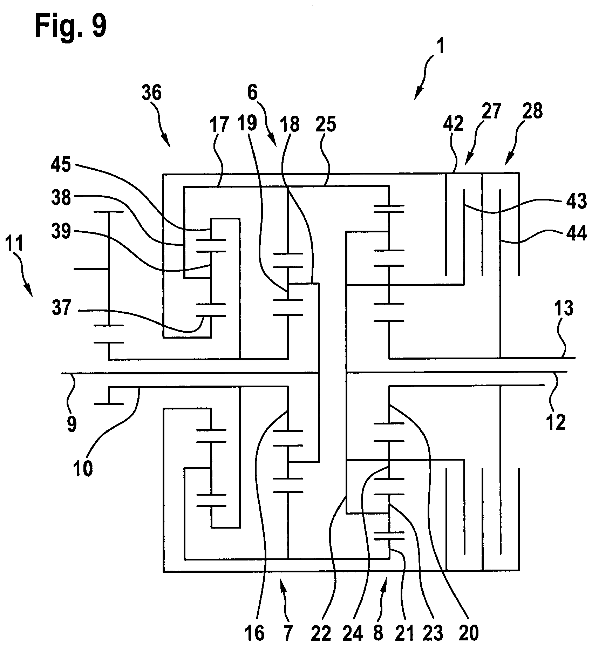

Die Figur 9 zeigt eine dritte Variante der dritten Ausführungsform der Getriebeeinrichtung 1. Wiederum sei erneut auf die vorstehenden Ausführungen zu der ersten und zweiten Variante der dritten Ausführungsform verwiesen. Der Unterschied zu diesen liegt in einer anderen Ausgestaltung des Überlagerungsgetriebes 36, welches nunmehr als Minusplanetengetriebe ausgestaltet ist, während zuvor ein Plusplanetengetriebe vorlag. Das Überlagerungsgetriebe 36 weist das Überlagerungsgetriebesonnenrad 37, den Überlagerungsgetriebeplanetenträger 38 mit dem wenigstens einen Überlagerungsgetriebeplanetenrad 39 sowie ein Überlagerungsgetriebehohlrad 45 auf.

Das Überlagerungsgetriebehohlrad 45 ist starr und/oder permanent mit der Abtriebswelle 10 wirkverbunden. Der Überlagerungsgetriebeplanetenträger 38 ist dagegen mit dem ersten Hohlrad 17, dem zweiten Hohlrad 21 beziehungsweise dem gemeinsamen Hohlrad 25 starr und/oder permanent wirkverbunden. Das erste Kupplungselement 42 ist mit dem Überlagerungsgetriebesonnenrad 37 starr und/oder permanent gekoppelt beziehungsweise an diesem befestigt. Auch mit dieser dritten Variante können die Vorteile der weiteren Varianten beziehungsweise der weiteren Ausführungsformen realisiert werden. Allerdings weist die dritte Variante einen hohen Bauraumbedarf auf.

### BEZUGSZEICHENLISTE

- 1: Getriebeeinrichtung
- 2: 1. Radachse
- 3: 2. Radachse
- 4: 1. Teilachse
- 5: 2. Teilachse
- 6: Koppelgetriebe
- 7: 1. Planetengetriebe
- 8: 2. Planetengetriebe
- 9: Antriebswelle
- 10: Abtriebswelle
- 11: Zahnradstufe
- 12: 1. Verbindungswelle
- 13: 2. Verbindungswelle
- 14: 1. Getriebeeinheit
- 15: 2. Getriebeeinheit
- 16: 1. Sonnenrad
- 17: 1. Hohlrad
- 18: 1. Planetenträger
- 19: Planetenrad
- 20: 2. Sonnenrad
- 21: 2. Hohlrad
- 22: 2. Planetenträger
- 23: Außenplanetenrad
- 24: Innenplanetenrad
- 25: Gemeinsames Hohlrad
- 26: Zahnradstufe
- 27: Kupplung
- 28: Kupplung
- 29: Kopplung

## Patentansprüche

1. Getriebeeinrichtung (1) für ein Kraftfahrzeug, wobei das Kraftfahrzeug eine erste Radachse (2) und eine zweite Radachse (3) aufweist, und wobei die zweite Radachse (3) aus zumindest einer ersten Teilachse (4) und einer zweiten Teilachse (5) besteht, **gekennzeichnet durch** eine mit der ersten Teilachse (4) wirkverbindbare erste Verbindungswelle (12), durch eine mit der zweiten Teilachse (5) wirkverbindbare zweite Verbindungswelle (13) sowie durch ein Koppelgetriebe (6) mit einer mit einem Antriebsaggregat des Kraftfahrzeugs wirkverbindbaren Antriebswelle (9) und mit einer mit der ersten Radachse (2) wirkverbindbaren Abtriebswelle (10), wobei über das Koppelgetriebe (6) die Antriebswelle (9) mit der Abtriebswelle (10) sowie mit der ersten und der zweiten Verbindungswelle (12,13) drehmomentaufteilend wirkverbunden ist, und wobei die Abtriebswelle (10) über ein Überlagerungsgetriebe (36) schaltbar mit der ersten Verbindungswelle (12) und/oder der zweiten Verbindungswelle (13) wirkverbindbar ist.

2. Getriebeeinrichtung nach Anspruch 1, **dadurch gekennzeichnet, dass** das Koppelgetriebe (6) ein erstes Planetengetriebe (7) und ein mit dem ersten Planetengetriebe (7) unmittelbar wirkverbundenes zweites Planetengetriebe (8) aufweist, wobei die Antriebswelle (9) und die Abtriebswelle (10) unmittelbar mit dem ersten Planetengetriebe (7) und die erste sowie die zweite Verbindungswelle (12,13) unmittelbar mit dem zweiten Planetengetriebe (8) wirkverbunden sind.

3. Getriebeeinrichtung nach einem der vorhergehenden Ansprüche, **dadurch gekennzeichnet, dass** das erste Planetengetriebe (7) ein erstes Sonnenrad (16), ein erstes Hohlrad (17) und einen ersten Planetenträger (18) mit wenigstens einem mit dem ersten Sonnenrad (16) und dem ersten Hohlrad (17) kämmenden Planetenrad (19) aufweist, wobei der erste Planetenträger (18) mit der Antriebswelle (9) und das erste Sonnenrad (16) mit der Abtriebswelle (10) wirkverbunden ist.

4. Getriebeeinrichtung nach einem der vorhergehenden Ansprüche, **dadurch gekennzeichnet, dass** das zweite Planetengetriebe (8) ein zweites Sonnenrad (20), ein zweites Hohlrad (21) und einen zweiten Planetenträger (22) aufweist, wobei der zweite Planetenträger (22) mit der ersten oder der zweiten Verbindungswelle (12,13) und das zweite Sonnenrad (20) mit der jeweils anderen Verbindungswelle (13,12) wirkverbunden ist.

5. Getriebeeinrichtung nach einem der vorhergehenden Ansprüche, **dadurch gekennzeichnet, dass** der zweite Planetenträger (22) zumindest ein Außenplanetenrad (23) und zumindest ein Innenplanetenrad (24) aufweist, die miteinander kämmen, wobei das Außenplanetenrad (23) mit dem zweiten Hohlrad (21) und das Innenplanetenrad (24) mit dem zweiten Sonnenrad (20) kämmt.

6. Getriebeeinrichtung nach einem der vorhergehenden Ansprüche, **dadurch gekennzeichnet, dass** die Wirkverbindung zwischen der zweiten Verbindungswelle (13) und dem zweiten Planetenträger (22) über eine Zahnradstufe (26) oder die Wirkverbindung zwischen der zweiten Verbindungswelle (13) und dem zweiten Sonnenrad (20) über eine weitere Zahnradstufe oder über eine drehrichtungserhaltende Kopplung (29), insbesondere über ein Umschlingungsgetriebe oder über ein drehrichtungserhaltendes Zahnradgetriebe, vorliegt.

7. Getriebeeinrichtung nach einem der vorhergehenden Ansprüche, **dadurch gekennzeichnet, dass** das Überlagerungsgetriebe (36) als Planetengetriebe ausgebildet ist, über das die Abtriebswelle (10) mit dem ersten Hohlrad (17) und/oder dem zweiten Hohlrad (21) wirkverbunden ist.

8. Getriebeeinrichtung nach einem der vorhergehenden Ansprüche, **dadurch gekennzeichnet, dass** das Überlagerungsgetriebe (36) ein Überlagerungsgetriebesonnenrad (37) und einen Überlagerungsgetriebeplanetenträger (38) aufweist, wobei ein an dem Überlagerungsgetriebeplanetenträger (38) gelagertes erstes Überlagerungsgetriebeplanetenrad (39) mit dem mit der Abtriebswelle (10) gekoppelten Überlagerungsgetriebesonnenrad (37) und ein ebenfalls an dem Überlagerungsgetriebeplanetenträger (38) gelagertes zweites Überlagerungsgetriebeplanetenrad (40) mit einem mit dem ersten Hohlrad (17) und/oder dem zweiten Hohlrad (21) gekoppelten Überlagerungsgetrieberad (41) kämmt.

9. Getriebeeinrichtung nach einem der vorhergehenden Ansprüche, **gekennzeichnet durch** wenigstens eine Kupplung (27, 28), mittels welcher der zweite Planetenträger (22) oder das zweite Sonnenrad (20) bezüglich des ersten Planetenträgers (18) oder bezüglich des Überlagerungsgetriebeplanetenträgers (38) zumindest teilweise, insbesondere vollständig, festsetzbar ist.

10. Getriebeeinrichtung nach einem der vorhergehenden Ansprüche, **dadurch gekennzeichnet, dass** die erste Verbindungswelle (12) über eine erste Getriebeeinheit (14) mit der ersten Teilachse (4) und die zweite Verbindungswelle (13) über eine, insbesondere identisch mit der ersten Getriebeeinheit (14) ausgebildete zweite Getriebeeinheit (15) mit der zweiten Teilachse (5) verbindbar ist.

## Claims

1. Gear device (1) for a motor vehicle, wherein the motor vehicle has a first wheel axle (2) and a second wheel axle (3), and wherein the second wheel axle (3) consists of at least one first partial axle (4) and one second partial axle (5), **characterised by** a first connection shaft (12) that can be operatively connected to the first partial axle (4), by a second connection shaft (13) that can be operatively connected to the second partial axle (5) as well as by a coupling gear (6) with a drive shaft (9) that can be operatively connected to a drive unit of the motor vehicle and with an output shaft (10) that can be operatively connected to the first wheel axle (2), wherein the drive shaft (9) is operatively connected to the output shaft (10) and to the first and the second connection shaft (12, 13) in a torque splitting manner via the coupling gear (6) and wherein the output shaft (10) can be operatively connected via a superimposed gear (36) switchable with the first connection shaft (12) and/or the second connection shaft (13).

2. Gear device according to claim 1, **characterised in that** the coupling gear (6) has a first planet gear (7) and a second planet gear (8) directly operatively connected to the first planet gear (7), wherein the drive shaft (9) and the output shaft (10) are operatively connected directly to the first planet gear (7) and the first and second connection shaft (12, 13) directly to the second planet gear (8).

3. Gear device according to any one of the preceding claims, **characterised in that** the first planet gear (7) has a first sun gear (16), a first ring gear (17) and a first planet carrier (18) with at least one planet pinon (19) engaging with the first sun gear (16) and the first ring gear (17), wherein the first planet carrier (18) is operatively connected to the drive shaft (9) and the first sun gear (16) to the output shaft (10).

4. Gear device according to any one of the preceding claims, **characterised in that** the second planet gear (8) has a second sun gear (20), a second ring gear (21) and a second planet carrier (22), wherein the second planet carrier (22) is operatively connected to the first or the second connection shaft (12, 13) and the second sun gear (20) to the respectively other connection shaft (13, 12).

5. Gear device according to any one of the preceding claims, **characterised in that** the second planet carrier (22) has at least one outer planet pinon (23) and at least one inner planet pinon (24) which engage with each other wherein the outer planet pinon (23) engages with the second ring gear (21) and the inner planet pinon (24) engages with the second sun gear (20).

6. Gear device according to any one of the preceding claims, **characterised in that** the operative connection between the second connection shaft (13) and the second planet carrier (22) is present via a toothed wheel stage (26) or the operative connection between the second connection shaft (13) and the second sun gear (20) is present via a further toothed wheel stage or via a coupling (29) maintaining a rotational direction, in particular via a continuously variable gear or via a toothed wheel gear maintaining a rotational direction.

7. Gear device according to any one of the preceding claims, **characterised in that** the superimposed gear (36) is designed as a planet gear via which the output shaft (10) is operatively connected to the first ring gear (17) and/or the second ring gear (21).

8. Gear device according to any one of the preceding claims, **characterised in that** the superimposed gear (36) has a superimposed gear sun gear (37) and a superimposed gear planet carrier (38), wherein a first superimposed gear planet pinon (39) mounted on the superimposed gear planet carrier (38) engages with the superimposed gear sun gear (37) coupled to the.output shaft (10) and a second superimposed gear planet pinon (40) also mounted on the superimposed gear planet carrier (38) engages with a superimposed gear wheel (41) coupled to the first ring gear (17) and/or the second ring gear (21).

9. Gear device according to any one of the preceding claims, **characterised by** at least one coupling (27, 28) by means of which the second planet carrier (22) or the second sun gear (20) can be at least partially, in particular fully set in relation to the first planet carrier (18) or in relation to the superimposed gear planet carrier (38).

10. Gear device according to any one of the preceding claims, **characterised in that** the first connection shaft (12) can be connected via a first gear unit (14) to the first partial axle (4) and the second connection shaft (13) can be connected to the second partial axle (5) via a second gear unit (15) in particular designed identically to the first gear unit (14).

## Revendications

1. Dispositif d'engrenage (1) pour un véhicule automobile, dans lequel le véhicule automobile présente un premier essieu (2) et un second essieu (3), et dans lequel le second essieu (3) se compose d'au moins un premier essieu partiel (4) et d'un second essieu partiel (5), **caractérisé par** un premier arbre de liaison (12) pouvant être relié activement au premier essieu partiel (4), par un second arbre de liaison (13) pouvant être relié activement au second essieu partiel (5) ainsi que par un engrenage de couplage (6) avec un arbre d'entraînement (9) pouvant être relié activement à un groupe d'entraînement du véhicule automobile et avec un arbre de sortie (10) pouvant être relié activement au premier essieu (2), dans lequel l'arbre d'entraînement (9) est relié activement en répartissant le couple par l'intermédiaire de l'engrenage de couplage (6) à l'arbre de sortie (10) ainsi qu'au premier et au second arbre de liaison (12, 13), et dans lequel l'arbre de sortie (10) peut être relié activement de manière commutable par l'intermédiaire d'un engrenage à superposition (36) au premier arbre de liaison (12) et/ou au second arbre de liaison (13).

2. Dispositif d'engrenage selon la revendication 1, **caractérisé en ce que** l'engrenage de couplage (6) présente un premier engrenage planétaire (7) et un second engrenage planétaire (8) relié activement directement au premier engrenage planétaire (7), dans lequel l'arbre d'entraînement (9) et l'arbre de sortie (10) sont reliés activement directement au premier engrenage planétaire (7) et le premier ainsi que le second arbre de liaison (12, 13) sont reliés activement directement au second engrenage planétaire (8).

3. Dispositif d'engrenage selon l'une quelconque des revendications précédentes, **caractérisé en ce que** le premier engrenage planétaire (7) présente une première roue solaire (16), une première roue creuse (17) et un premier support planétaire (18) avec au moins une roue planétaire (19) s'engrenant avec la première roue solaire (16) et la première roue creuse (17), dans lequel le premier support planétaire (18) est relié activement à l'arbre d'entraînement (9) et la première roue solaire (16) est reliée activement à l'arbre de sortie (10).

4. Dispositif d'engrenage selon l'une quelconque des revendications précédentes, **caractérisé en ce que** le second engrenage planétaire (8) présente une seconde roue solaire (20), une seconde roue creuse (21) et un second support planétaire (22), dans lequel le second support planétaire (22) est relié activement au premier ou au second arbre de liaison (12, 13) et la seconde roue solaire (20) est reliée activement à l'autre arbre de liaison (13, 12) respectivement.

5. Dispositif d'engrenage selon l'une quelconque des revendications précédentes, **caractérisé en ce que** le second support planétaire (22) présente au moins une roue planétaire extérieure (23) et au moins une roue planétaire intérieure (24) qui s'engrènent l'une à l'autre, dans lequel la roue planétaire extérieure (23) s'engrène avec la seconde roue creuse (21) et la roue planétaire intérieure (24) avec la seconde roue solaire (20).

6. Dispositif d'engrenage selon l'une quelconque des revendications précédentes, **caractérisé en ce que** la liaison active entre le second arbre de liaison (13) et le second support planétaire (22) est réalisée par le biais d'un étage de roue dentée (26) ou la liaison active entre le second arbre de liaison (13) et la seconde roue solaire (20) est réalisée par le biais d'un autre étage de roue dentée ou par le biais d'un couplage conservant le sens de rotation (29), en particulier par le biais d'un engrenage d'enroulement ou par le biais d'un engrenage de roue dentée conservant le sens de rotation.

7. Dispositif d'engrenage selon l'une quelconque des revendications précédentes, **caractérisé en ce que** l'engrenage à superposition (36) est réalisé comme un engrenage planétaire, par le biais duquel l'arbre de sortie (10) est relié activement à la première roue creuse (17) et/ou à la seconde roue creuse (21).

8. Dispositif d'engrenage selon l'une quelconque des revendications précédentes, **caractérisé en ce que** l'engrenage à superposition (36) présente une roue solaire d'engrenage à superposition (37) et un support planétaire d'engrenage à superposition (38), dans lequel une première roue planétaire d'engrenage à superposition (39) logée sur le support planétaire d'engrenage à superposition (38) s'engrène avec la roue solaire d'engrenage à superposition (37) couplée à l'arbre de sortie (10) et une seconde roue planétaire d'engrenage à superposition (40) logée aussi sur le support planétaire d'engrenage à superposition (38) s'engrène avec une roue d'engrenage à superposition (41) couplée à la première roue creuse (17) et/ou la seconde roue creuse (21).

9. Dispositif d'engrenage selon l'une quelconque des revendications précédentes, **caractérisé par** au moins un couplage (27, 28) au moyen duquel le second support planétaire (22) ou la seconde roue solaire (20) peut être fixée par rapport au premier support planétaire (18) ou par rapport au support planétaire d'engrenage à superposition (38) au moins partiellement, en particulier complètement.

10. Dispositif d'engrenage selon l'une quelconque des revendications précédentes, **caractérisé en ce que** le premier arbre de liaison (12) peut être relié par le biais d'une première unité d'engrenage (14) au premier essieu partiel (4) et le second arbre de liaison (13) peut être relié par le biais d'une seconde unité d'engrenage (15) réalisée en particulier de manière identique à la première unité d'engrenage (14) au second essieu partiel (5).
